# EUROPEAN PATENT SPECIFICATION

(11) **EP 4 100 146 B1**
(45) Date of publication and mention of the grant of the patent: **10.07.2024**
(21) Application number: 21713113.5
(22) Date of filing: 03.02.2021
(51) Int. Cl.: B01D 45/12, B01D 46/00, B01D 46/02, B01D 46/42, B01D 50/00

(54) **APPARATUS FOR THE SUCTION AND COLLECTION OF PROCESSING WASTE**
VORRICHTUNG ZUM ANSAUGEN UND SAMMELN VON PROZESSABFALL
DISPOSITIF POUR ASPIRER ET COLLECTIONNER DES DECHETS DE PRODUCTION

(30) Priority: 06.02.2020 IT 202000000562 U
(43) Date of publication of application: 14.12.2022
(73) Proprietor: Sigma Ingegneria S.r.l., 55100 Lucca (IT)
(72) Inventor: CARADONNA, Roberto, 56020 Santa Maria a Monte (Pisa) (IT); GIUSTI, Simone, 54100 Massa (IT)
(74) Representative: Firmati, Leonardo
(86) International application number: PCT/IB2021/050853
(87) International publication number: WO 2021/156754

(56) References cited:
- EP-A1- 3 029 264
- WO-A1-2014/133238
- CN-A- 110 140 531
- DE-A1- 19 826 002
- KR-Y1- 200 178 881
- SE-A1- 1 200 667
- US-A1- 2018 093 215

## Description

### Technical field

This invention relates to an apparatus for the suction and collection of processing waste.

More specifically, the apparatus for the suction and collection of processing waste according to the invention can be used in the sector for producing and processing leather products, textile products or paper products.

More generally speaking, the apparatus for the suction and collection of processing waste according to the invention can be used in any sector in which operations are carried out for the removal of swarf.

### Background art

There are prior art apparatuses for the suction and collection of processing waste designed for being directly connected to a respective machine for processing leather, textile or paper products in such a way as to suck most of the processing waste generated. The processing waste is transported and stored in suitable containers of a rigid or flexible type depending on the type of suction used.

Generally speaking, the collection containers are operatively connected to the suction apparatuses.

A first type of prior art apparatus for the suction and collection of processing waste comprises a main body with a regular shape, for example cylindrical, having an inlet opening and an outlet opening.

Close to the inlet opening, inside the container, there is a blocking unit configured to break the suction flow and cause the waste to drop by gravity towards a predetermined collection area.

The blocking unit is used to reduce the kinetic energy of the waste due to the suction force in such a way as not to suck it towards the outlet opening, where a filter is positioned.

In all types of waste suction and collection apparatuses it is essential that the filter remains as clean as possible in order to maximise suction efficiency and minimise maintenance activities.

This type of prior art apparatus is simple and inexpensive to construct but, however, has major drawbacks.

A major drawback is due to the fact that, whilst the medium and large size waste can be reduced and collected in the collection zone, the smaller waste, as it is more volatile, is conveyed towards the outlet opening and, therefore, towards the filter.

As a result, the filter tends to become dirty and clogged very frequently, consequently requiring frequent maintenance.

A second type of prior art apparatus for the suction and collection of processing waste comprises an air transit container housing an impeller which performs a twofold function.

The first function is that of generating a negative suction pressure and the second function is that of being the element for blocking and, if necessary, breaking up and transporting the waste being sucked.

This type of prior art type, although it allows a good efficiency with regard to suction, is also not free of drawbacks.

One major drawback is due to the fact that the waste coming into contact with the suction impeller tends to negatively affect its correct operation in relatively short periods of time.

It is known that while medium and large waste can be conveyed towards the collection area without the risk of being trapped in the impeller mechanisms, the waste with smaller dimensions, on the other hand, tends to find its way into every hollow area of the impeller mechanism, compromising the correct operation in a relatively short space of time. EP 3 029 264 A1, DE 198 26 002 A1, CN 110 140 531 A, WO 2014/133238 A1, SE 1 200 667 A1, KR 200 178 881 Y1 and US 2018/093215 A1 are relevant prior art documents.

### Aim of the invention

The aim of the invention is to provide an apparatus for the suction and collection of processing waste which is able to fully satisfy the requirements of the specific sector, optimising the suction of processing waste and reducing the frequency of maintenance necessary for the correct operation of the apparatus.

A further aim of the invention is to provide an apparatus for the suction and collection of processing waste which is immune, not undergoing any irreversible damage, to any triggering of fire inside the container for collecting the processing waste.

Another aim of the invention is to provide an apparatus for the suction and collection of processing waste which can be easily moved by a user without the need to use means of transport, such as, for example, industrial lift trucks or lifting devices.

According to the invention, these aims and others are achieved by an apparatus for the suction and collection of processing waste comprising the technical features described in the accompanying claims.

### Brief description of the drawings

The technical features of the invention, with reference to the above-mentioned aims, are clearly described in the appended claims and its advantages are apparent from the detailed description which follows, with reference to the accompanying drawings which illustrate a nonlimiting example embodiment of the invention and in which:
- Figure 1 is a perspective view of an apparatus for the suction and collection of processing waste according to the invention,
- Figure 2 is a side view in cross section of the apparatus for the suction and collection of processing waste of Figure 1,
- Figure 3 shows a detail of the upper portion of the main body of an apparatus for the suction and collection of processing waste according to the invention,
- Figure 4 is an upper view of the main body of Figure 3 and
- Figure 5 is a perspective view of an apparatus for the suction and collection of processing waste according to the invention in which the container for collecting the processing waste has been removed from its housing;
- Figure 6 shows a second embodiment of an apparatus according to the invention..

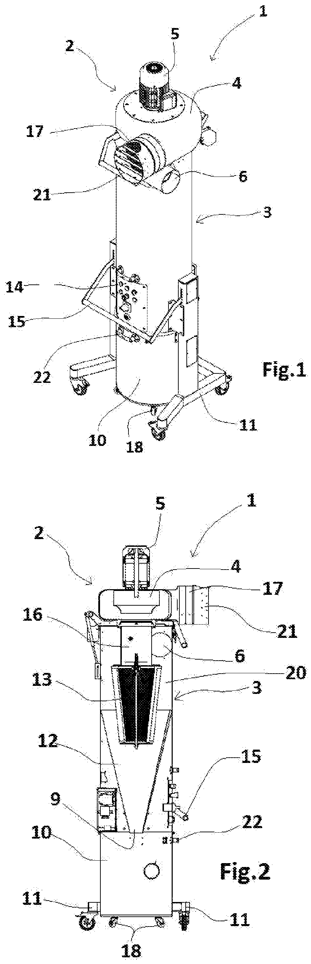

As illustrated in Figures 1 to 6, the numeral 1 denotes in its entirety an apparatus 1 for the suction and collection of processing waste made according to the invention.

### Detailed description of preferred embodiments of the invention

The apparatus 1 for the suction and collection of processing waste according to the invention comprises in an embodiment a main body 3 comprising at least one inlet opening 6, 7 for the processing waste and a lower outlet opening 9.

The main body 3 is advantageously open at the top at an upper surface 8 of the main body 3.

The at least one inlet opening 6, 7 is advantageously located at an upper portion of the main body 3, that is to say, close to the upper surface 8.

The inlet openings 6, 7 are located on the lateral surface of the main body 3.

The outlet opening 9 is advantageously positioned in the vicinity of a lower portion of the main body 3 and in any case at a height lower than the above-mentioned inlet openings 6, 7.

Advantageously, the apparatus 1 for the suction and collection of processing waste according to the invention also comprises a control unit 14 configured to manage the entire step of the suction and collection of processing waste, that is, of the operation of the apparatus 1. The suction apparatus 1 also comprises a suction device 2 positioned in fluid communication with the main body 3 and comprising an impeller 4 connected to a respective electric motor 5.

The suction device 2 is configured to generate inside the main body 3 a negative pressure designed to suck the processing waste towards the lower outlet opening 9. The suction device 2 is positioned outside the main body 3 and at the surface 8 of the containment body 3.

The suction device 2 is configured to generate a negative pressure (by suction) inside the main body 3.

The impeller 4 is advantageously inserted in a relative protective guard in such a way as to convey the air sucked towards a respective outlet opening 21.

Advantageously, at the outlet opening 21 of the impeller there is a silencing device 17, for example made of a material which is permeable to air and soundproofing. An anemometer 37 is according to the invention positioned at the outlet opening 21.

The anemometer 37 is connected to the command and control unit 14 of the apparatus 1 in such a way as to manage its operation as a function of the actual performance measured by the anemometer 37.

In order to prevent problems linked to any obstructions which can be generated inside the apparatus 1, for example due to a high accumulation of waste or for the suction of extremely low density objects (that is to say, objects characterised by a large volume and a low mass which are therefore bulky and volatile) the anemometer makes it possible to measure the speed of the air flow close to the outlet opening 21, that is to say, downstream of the filter 13.

Using the command and control unit 14 which is able to instantaneously process the data coming from the anemometer 37, the unit 14 is able to estimate any pressure jump generated between upstream and downstream of the filter 13.

After a certain preset pressure jump has been exceeded, the apparatus 1 is switched off and provides an alarm avoiding faults linked to high motor absorption or overpressures.

In addition to the protection of the apparatus 1 as such, the presence of the anemometer 37 guarantees a monitoring on the state of cleaning of the filter 13 and therefore a performance index of the machine. The impeller 4 is in fluid communication with the inside of the main body 3 through a draw-out device 16 to which a filter 13 is connected.

The filter 13 is advantageously of the cartridge type with a conical shape.

The filter 13 is also advantageously made of polyester and coated with an antistatic material.

For the correct operation of the antistatic material, the filter 13 comprises a relative earthing, not shown in the drawings, designed to be connected to the earthing point of the apparatus 1.

The filter 13 also comprises a recognition system capable of allowing a coupling between the filter 13 and a particular apparatus 1 on which it is installed.

The recognition of the filter coupling 13-apparatus 1 makes it possible to monitor the life of a single filter 13, tracking the operating hours and with which specific apparatus 1 it has been coupled each time and how many times it has been cleaned and/or washed.

In this regard, in detail, the filter 13 comprises an automated tracking system which is able to communicate with the apparatus 1 on which they are installed. Therefore, by comparing the data regarding life of the filter 13 and those regarding the operating status of a specific apparatus 1 provided by the anemometer 37 it is possible to provide an estimate of preventive maintenance of the filters 13 and a service for regenerating the filters 13 which can be cleaned and installed several times in the apparatus 1.

The configuration of the suction device 2 and the geometry of the main body 3 allow a so-called cyclonic suction to be obtained.

The cyclonic type suction acts by separating the processing waste (and the finer dust) of the air sucked through the inlet openings 6, 7 inside the main body 3 by the centrifugal force generated by an air cyclone produced inside it by the suction device 2.

The apparatus 1 according to this invention also comprises a container 10 for collecting processing waste connected in an airtight fashion to the main body 3 and designed to receive the waste by gravity from the outlet opening 9.

The collection container 10 is made in the form of a bucket which comprises respective gripping means 22 to facilitate handling by a user during emptying of the container.

The apparatus 1 for the suction and collection of processing waste also comprises movement means 11 on wheels connected to the main body 3 to allow an easy movement of the apparatus by a user without the need to use special machinery such as, for example, forklift trucks or lifting devices.

Preferably, the collection container 10 also comprises respective wheels 18.

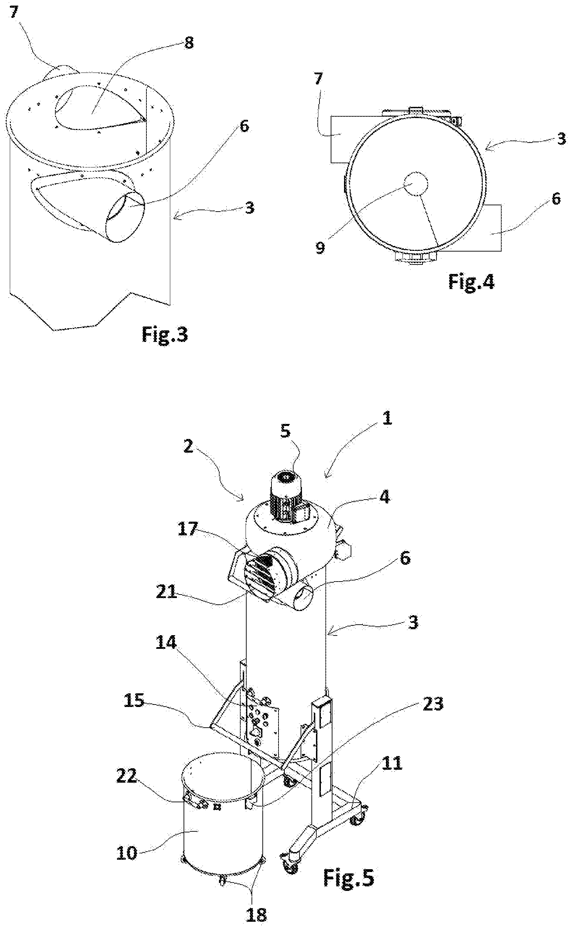

As shown in detail in Figures 3 and 4, the main body 3 according to the invention comprises two inlet openings 6, 7 for the processing waste.

The two inlet openings 6, 7 are positioned tangentially to the main body 3 and in a distal position from each other.

The mutually distal and tangential position of the inlet openings 6, 7 further optimises the effectiveness of the cyclonic technology of the suction device 2.

Advantageously, as shown in the cross section of Figure 2, the apparatus 1 also comprises conveying means 12, 20 configured to put the collection container 10 in fluid communication with the at least one inlet opening 6, 7. Advantageously, the conveying means comprise a first, cylindrical upper portion 20 and a second, truncated cone lower portion 12.

The second lower portion 12 terminates at the outlet opening 9, that is to say, facing towards the collection container 10.

The second portion 12 with a truncated cone shape allows the suction cyclone motion to be generated inside the main body 3.

The first portion 20 and the second portion 12 of the conveying means are joined uninterruptedly in such a way as to not negatively affect the suction flow inside the main body 3.

Figure 5 shows an apparatus 1 for the suction and collection of processing waste according to the invention in a further operating configuration, that is to say, with the collection container 10 disconnected from the main body 3.

The collection container 10 can be disconnected from the main body 3 using respective engagement/disengagement means 23.

In order to facilitate the engagement and disengagement of the collection container 10, the apparatus 1 for the suction and collection of processing waste also comprises container disengagement means 15 designed to move the collection container 10 from a first air-tight configuration in contact with the main body 3 to a second configuration wherein the collection container 10 is disengaged from the main body 3.

The disengagement means 15 advantageously comprise a mechanical lever which extends away from the main body 3.

The main body 3 also comprises at least one moisture detection sensor configured for measuring the degree of moisture inside the collection container 10. According to the invention the device comprises a device for dispensing and extinguishing substance, such as, for example, water; the latter is configured for dispensing the above-mentioned extinguishing substance inside the collection container 10.

Advantageously, the sensor for detecting moisture and the dispenser of a extinguishing substance are installed close to a lower portion of the main body 3, both facing towards the inside of the collection container 10.

Advantageously, the dispenser of an extinguishing substance may also comprise a spray extinguishing system.

Moreover, advantageously, a system may be installed inside the collection container 10 for extinguishing flames of an explosive type which is enabled automatically and without the need for an external supply, upon reaching a predetermined temperature inside the collection body 10, for example between 70° and 90°, advantageously 72°.

The apparatus 1 according to this invention emits a warning signal or interrupts its operation in response to a lowering of the moisture values, which may correspond to the occurrence of an ignition of a fire inside the collection container 10.

Advantageously, the apparatus 1 also comprises a system for transmitting the data collected by the command and control unit 14 (for example PLC) and by the plurality of sensors installed on the apparatus 1.

The apparatus 1 comprises a plurality of sensors:
Anemometer 37: designed to measure the speed of the air downstream of the filter at the outlet opening 21;
moisture and temperature sensor: designed to measure the ambient conditions inside the collection container 10 and therefore make a fire prevention system;
water tank level sensor: designed to measure the level of water contained in the tank, used to restore the optimum ambient conditions inside the collection container 10;
amperometric sensor for the motor 5: designed to measure the motor 5 absorption peaks and monitor its consumption.

Advantageously, all the data from the above-mentioned sensors is transmitted from the apparatus 1 via Wi-Fi or Ethernet connection to a server on which it is stored and can be displayed by means of an application (TELEMETRIA) .

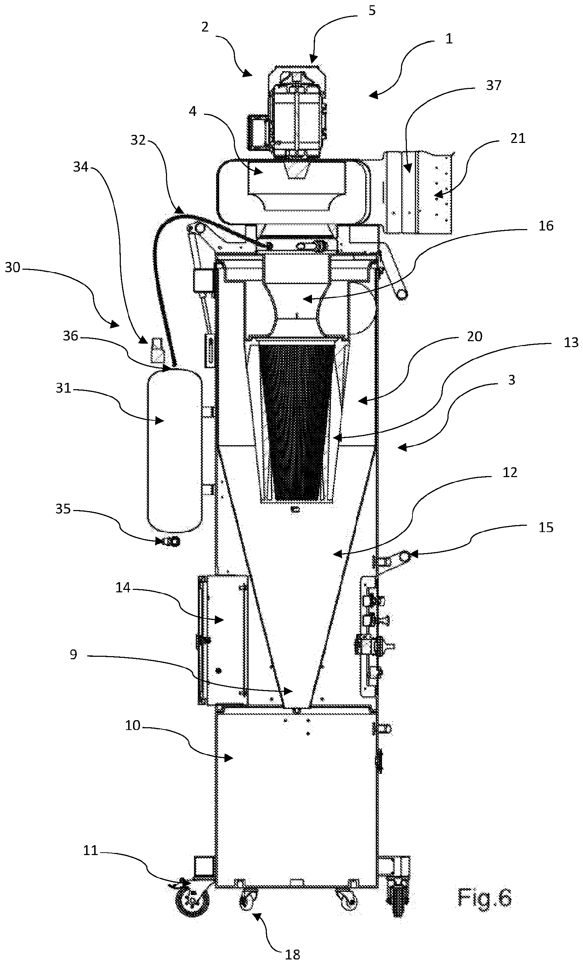

This application, in addition to the real-time monitoring of all the data coming from the sensors, provides useful data such as the working hours, the number and the type of emergencies the apparatus 1 has encountered and a series of reports generated, for example monthly, with a summary containing the performance indices of the apparatus 1 and the maintenance or improvement operations recommended. Figure 6 shows a second embodiment of an apparatus 1 according to this invention.

In this embodiment, the apparatus 1 comprises a source 30 of compressed air which is in fluid communication with the filter 13.

The source 30 of compressed air is configured to direct on the filter 13 a flow of compressed air designed to remove any waste deposited on it.

Advantageously, the flow of compressed air generated by the source of compressed air 30 leads to the draw-out device 16, which is interposed between the suction device 2 and the filter 13.

In this way, the entire flow of compressed air in an inner portion of the filter 13 can be directed, thereby optimising any detachment of waste from the filter 13 itself or of waste which may be in a condition of "floating" inside the conical portion 12 of the containment body 3.

The flow of compressed air thus makes it possible to guide the above-mentioned waste to settle in the collection container 10, passing through the outlet opening 9.

Advantageously, as shown in Figure 2, the draw-out device 16 comprises a Venturi tube configured to accelerate the flow of compressed air generated by the source 30 of compressed air towards the filter 13.

This acceleration further optimises the detachment and depositing in the collection container 10 of any waste. The source of compressed air 30 comprises an air storage tank 31 supplied by an external source through the inlet 35 of the tank 31.

Advantageously, the tank 31 is stably fixed to the containment body 3.

The tank 31 also comprises an outlet 36 to which a pipe 32 is connected.

The pipe 32 connects the tank 31 to the draw-out device 16, advantageously with a portion located immediately before the draw-out device 16 and after the impeller 4. The source 30 of compressed air also comprises a solenoid valve 34 which, connected to the command and control unit 14, makes it possible to manage the time intervals between one operation and the next of the source 30 (that is to say, the presence or absence of the flow of compressed air inside the draw-out device 16) and the duration of each individual actuation.

The flow of compressed air generated by the source 30 allows a shock wave to be generated towards the filter 13 which causes the waste to be detached therefrom and in general from the entire inside of the main body 3.

In the embodiment in which the draw-out device 16 comprises a Venturi tube the above-mentioned effect is optimised; in fact, a shock wave is created in counter-phase relative to the direction of the suction flow generated by the impeller 4. The shock wave is able to vibrate the filter 13, freeing it from any waste therein. The apparatus 1 for the suction and collection of processing waste according to the invention overcomes the drawbacks of the prior art and brings important advantages.

A first important advantage consists in the fact that the apparatus 1 for the suction and collection of processing waste according to the invention optimises the suction step using the cyclonic technology and at the same time reducing the dimensions and overall size of the apparatus 1 makes it easier for a user to move. The ease of movement of the entire apparatus 1 without the aid of forklift trucks or lifting devices makes it possible to optimise their use inside a production site, for example limiting the number of suction apparatuses 1 with respect to the processing stations.

In short, it is possible, if necessary, to easily move the apparatus 1 according to the invention to different processing stations at different times.

A further advantage consists in the fact that an apparatus 1 for the suction and collection of processing waste according to the invention makes it possible to obtain a high level of safety against any fires which may be triggered inside the collection container 10. This advantage is achieved not only by the presence of the moisture detection sensor and the dispenser of an extinguishing substance but also by the positioning of the collection container 10 relative to the filter 13 of the apparatus 1.

More specifically, the collection container 10 is positioned far from the above-mentioned filter 13, that is to say, far from the zone with a high oxygenation and, therefore, at a greater ire risk for the overall apparatus 1.

Another important advantage of the invention consists in the fact that the source of compressed air, that is to say, the shock wave generated by it with respect to the filter 13, allows the maintenance work for cleaning the filter 13 to be considerably reduced, as well as allowing the conical portion 12 (and in general, the entire internal space of the containment body 3) to be kept cleaner and more functional.

## Claims

1. An apparatus (1) for the cyclonic suction and collection of processing waste comprising:
- a main body (3) comprising two inlet openings (6, 7) for said processing waste and a lower outlet opening (9), said two inlet openings (6, 7) being positioned mutually distal and tangential with respect to said main body (3);
- a command and control unit (14) configured to manage the suction of said processing waste;
- a suction device (2) in fluid communication with said main body (3) and comprising an impeller (4) connected to a respective electric motor (5), and a relative protective guard of said impeller (4), said suction device (2) being configured to generate inside said main body (3) a negative pressure designed to suck said processing waste towards said lower outlet opening (9), said impeller (4) being inserted in said relative protective guard in such a way as to convey the air sucked towards a respective outlet opening (21),
- a filter (13) housed inside said main body (3) for filtering the air sucked by said suction device (2);
- a container (10) for collecting said processing waste connected in an airtight manner to said main body (3) and designed to receive said waste from said outlet opening (9) by gravity;
- an anemometer (37) positioned at said outlet opening (21), said anemometer (37) being connected to said command and control unit (14) of the apparatus (1) in such a way as to manage its operation as a function of the actual performance measured by said anemometer (37) ;
said command and control unit (14) being able to instantaneously process the data coming from said anemometer (37) and being able to estimate any pressure jump generated between upstream and downstream of the filter (13);
- a dispenser of an extinguishing substance configured for dispensing the extinguishing substance inside said collection container (10).

2. The apparatus (1) according to claim 1, **characterised in that** it comprises a source (30) of compressed air in fluid communication with said filter (13) and being configured to direct on said filter (13) a flow of compressed air designed to remove any waste deposited on it.

3. The apparatus (1) according to claim 2, **characterised in that** it comprises a draw-out device (16) interposed between said suction device (2) and said filter (13), said flow of compressed air generated by said source of compressed air (30) leading to said draw-out device (16) .

4. The apparatus (1) according to claim 3, **characterised in that** said draw-out device (16) comprises a Venturi tube configured to accelerate said flow of compressed air generated by said source (30) of compressed air towards said filter (13).

5. The apparatus (1) according to any one of the preceding claims, also comprising conveying means (12, 20) configured to place in fluid communication said collection container (10) and said at least one inlet opening (6, 7), said conveying means (12, 20) comprising a first cylindrical upper portion (20) and a second frusto-conical lower portion (12), said second lower portion (12) ending at said outlet opening (9).

6. The apparatus (1) according to any one of the preceding claims, also comprising movement means (11) on wheels connected to said main body (3).

7. The apparatus (1) according to any one of the preceding claims, wherein the collection container (10) can be disconnected from said main body (3).

8. The apparatus (1) according to claim 6, wherein said collection container (10) comprises movement means on wheels (18) independent from said movement means on wheels (11) connected to said main body (3).

9. The apparatus (1) according to any one of the preceding claims, also comprising at least one moisture detecting sensor configured for measuring the degree of moisture inside said collection container (10).

10. The apparatus (1) according to claim 8 or 9, wherein said at least one sensor for detecting moisture inside said collection container (10) and/or said dispenser of an extinguishing substance are installed in a lower portion of said main body (3) facing said collection container (10).

11. The apparatus (1) according to any one of the preceding claims, also comprising means (15) for disengaging said collection container (10) from said main body (3) designed to move said collection container (10) from a first air-tight configuration in contact with said main body (3) to a second configuration wherein said collection container (10) is disengaged from said main body (3).

## Patentansprüche

1. Vorrichtung (1) zum zyklonischen Ansaugen und Sammeln von Verarbeitungsabfall, umfassend:
- einen Hauptkörper (3), der zwei Einlassöffnungen (6, 7) für den Verarbeitungsabfall und eine untere Auslassöffnung (9) umfasst, wobei die zwei Einlassöffnungen (6, 7) gegenseitig distal und tangential in Bezug auf den Hauptkörper (3) positioniert sind;
- eine Befehls- und Steuereinheit (14), die ausgelegt ist, um das Ansaugen des Verarbeitungsabfalls zu verwalten;
- eine Saugeinrichtung (2) in Fluidkommunikation mit dem Hauptkörper (3) und umfassend ein Laufrad (4), das mit einem jeweiligen Elektromotor (5) verbunden ist, und eine relative Schutzhaube des Laufrads (4), wobei die Saugeinrichtung (2) so ausgelegt ist, dass sie im Inneren des Hauptkörpers (3) einen Unterdruck erzeugt, der dazu bestimmt ist, den Verarbeitungsabfall in Richtung der unteren Auslassöffnung (9) zu saugen, wobei das Laufrad (4) in die relative Schutzhaube eingesetzt ist, sodass die angesaugte Luft in Richtung einer jeweiligen Auslassöffnung (21) gefördert wird,
- einen Filter (13), der in dem Hauptkörper (3) untergebracht ist, um die von der Saugeinrichtung (2) angesaugte Luft zu filtern;
- einen Behälter (10) zum Sammeln des Verarbeitungsabfalls, der luftdicht mit dem Hauptkörper (3) verbunden ist und dazu bestimmt ist, den Abfall aus der Auslassöffnung (9) durch Schwerkraft zu empfangen;
- ein Anemometer (37), das an der Auslassöffnung (21) positioniert ist, wobei das Anemometer (37) mit der Befehls- und Steuereinheit (14) der Vorrichtung (1) verbunden ist, sodass sie ihren Betrieb als Funktion der durch das Anemometer (37) gemessenen tatsächlichen Leistung steuert;
wobei die Befehls- und Steuereinheit (14) in der Lage ist, die Daten, die von dem Anemometer (37) kommen, sofort zu verarbeiten und in der Lage ist, einen jeden Drucksprung abzuschätzen, der zwischen stromaufwärts und stromabwärts des Filters (13) erzeugt wird;
- einen Spender für eine Löschsubstanz, der zum Abgeben der Löschsubstanz innerhalb des Sammelbehälters (10) ausgelegt ist.

2. Vorrichtung (1) nach Anspruch 1, **dadurch gekennzeichnet, dass** sie eine Druckluftquelle (30) umfasst, die in Fluidkommunikation mit dem Filter (13) steht und dazu ausgelegt ist, einen Druckluftstrom auf den Filter (13) zu richten, der dazu bestimmt ist, jeglichen darauf abgelagerten Abfall zu entfernen.

3. Vorrichtung (1) nach Anspruch 2, **dadurch gekennzeichnet, dass** sie eine Abzugeinrichtung (16) umfasst, die zwischen der Saugeinrichtung (2) und dem Filter (13) angeordnet ist, wobei der von der Druckluftquelle (30) erzeugte Druckluftstrom zu der Abzugeinrichtung (16) führt.

4. Vorrichtung (1) nach Anspruch 3, **dadurch gekennzeichnet, dass** die Abzugeinrichtung (16) ein Venturirohr umfasst, das dazu ausgelegt ist, den von der Druckluftquelle (30) erzeugten Druckluftstrom in Richtung des Filters (13) zu beschleunigen.

5. Vorrichtung (1) nach einem der vorhergehenden Ansprüche, die auch Fördermittel (12, 20) umfasst, die ausgelegt sind, um den Sammelbehälter (10) und die mindestens eine Einlassöffnung (6, 7) in Fluidkommunikation zu bringen, wobei die Fördermittel (12, 20) einen ersten zylindrischen oberen Abschnitt (20) und einen zweiten kegelstumpfförmigen unteren Abschnitt (12) umfassen, wobei der zweite untere Abschnitt (12) an der Auslassöffnung (9) endet.

6. Vorrichtung (1) nach einem der vorhergehenden Ansprüche, die auch Bewegungsmittel (11) auf Rädern umfasst, die mit dem Hauptkörper (3) verbunden sind.

7. Vorrichtung (1) nach einem der vorhergehenden Ansprüche, wobei der Sammelbehälter (10) von dem Hauptkörper (3) getrennt werden kann.

8. Vorrichtung (1) nach Anspruch 6, wobei der Sammelbehälter (10) Bewegungsmittel auf Rädern (18) unabhängig von den Bewegungsmitteln auf Rädern (11) umfasst, die mit dem Hauptkörper (3) verbunden sind.

9. Vorrichtung (1) nach einem der vorhergehenden Ansprüche, die auch mindestens einen Feuchtigkeitsdetektionssensor umfasst, der zum Messen des Feuchtigkeitsgrads innerhalb des Sammelbehälters (10) ausgelegt ist.

10. Vorrichtung (1) nach Anspruch 8 oder 9, wobei der mindestens eine Sensor zum Detektieren von Feuchtigkeit innerhalb des Sammelbehälters (10) und/oder der Spender einer Löschsubstanz in einem unteren Abschnitt des Hauptkörpers (3) installiert sind, der dem Sammelbehälter (10) zugewandt ist.

11. Vorrichtung (1) nach einem der vorhergehenden Ansprüche, die auch Mittel (15) zum Lösen des Sammelbehälters (10) von dem Hauptkörper (3) umfasst, die dazu bestimmt sind, den Sammelbehälter (10) von einer ersten luftdichten Auslegung in Kontakt mit dem Hauptkörper (3) in eine zweite Auslegung zu bewegen, in der der Sammelbehälter (10) von dem Hauptkörper (3) gelöst ist.

## Revendications

1. Dispositif (1) pour l'aspiration cyclonique et la collecte de déchets de traitement, comprenant :
- un corps principal (3) comprenant deux ouvertures d'entrée (6, 7) pour lesdits déchets de traitement et une ouverture de sortie inférieure (9), lesdites deux ouvertures d'entrée (6, 7) étant positionnées mutuellement de manière distale et tangentielle par rapport audit corps principal (3) ;
- une unité de commande et de contrôle (14) configurée pour gérer l'aspiration desdits déchets de traitement ;
- un dispositif d'aspiration (2) en communication fluidique avec ledit corps principal (3) et comprenant une roue (4) reliée à un moteur électrique (5) respectif, et un carter de protection relatif de ladite roue (4), ledit dispositif d'aspiration (2) étant configuré pour générer à l'intérieur dudit corps principal (3) une pression négative destinée à aspirer lesdits déchets de traitement vers ladite ouverture de sortie inférieure (9), ladite roue (4) étant insérée dans ledit carter de protection relatif de manière à acheminer l'air aspiré vers une ouverture de sortie (21) respective,
- un filtre (13) logé à l'intérieur dudit corps principal (3) pour filtrer l'air aspiré par ledit dispositif d'aspiration (2) ;
- un récipient (10) pour la collecte desdits déchets de traitement relié de manière hermétique audit corps principal (3) et conçu pour recevoir lesdits déchets de ladite ouverture de sortie (9) par gravité ;
- un anémomètre (37) positionné en correspondance de ladite ouverture de sortie (21), ledit anémomètre (37) étant relié à ladite unité de commande et de contrôle (14) du dispositif (1) de manière à gérer son fonctionnement en fonction des performances réelles mesurées par ledit anémomètre (37) ;
ladite unité de commande et de contrôle (14) étant capable de traiter instantanément les données provenant dudit anémomètre (37) et étant capable d'estimer tout saut de pression généré entre l'amont et l'aval du filtre (13) ;
- un distributeur de substance extinctrice configuré pour distribuer la substance extinctrice à l'intérieur dudit récipient de collecte (10).

2. Dispositif (1) selon la revendication 1, **caractérisé en ce qu'**il comprend une source (30) d'air comprimé en communication fluidique avec ledit filtre (13) et étant configurée pour diriger sur ledit filtre (13) un flux d'air comprimé destiné à éliminer les déchets qui s'y sont déposés.

3. Dispositif (1) selon la revendication 2, **caractérisé en ce qu'**il comprend un dispositif d'évacuation (16) interposé entre ledit dispositif d'aspiration (2) et ledit filtre (13), ledit flux d'air comprimé généré par ladite source d'air comprimé (30) menant audit dispositif d'évacuation (16) .

4. Dispositif (1) selon la revendication 3, **caractérisé en ce que** ledit dispositif d'évacuation (16) comprend un tube de Venturi configuré pour accélérer ledit flux d'air comprimé généré par ladite source (30) d'air comprimé vers ledit filtre (13) .

5. Dispositif (1) selon l'une quelconque des revendications précédentes, comprenant également des moyens de transport (12, 20) configurés pour mettre en communication fluidique ledit récipient de collecte (10) et ladite au moins une ouverture d'entrée (6, 7), lesdits moyens de transport (12, 20) comprenant une première partie supérieure cylindrique (20) et une deuxième partie inférieure tronconique (12), ladite deuxième partie inférieure (12) se terminant en correspondance de ladite ouverture de sortie (9).

6. Dispositif (1) selon l'une quelconque des revendications précédentes, comprenant également des moyens de déplacement (11) sur roues reliés audit corps principal (3).

7. Dispositif (1) selon l'une quelconque des revendications précédentes, dans lequel le récipient de collecte (10) peut être décroché dudit corps principal (3).

8. Dispositif (1) selon la revendication 6, dans lequel ledit récipient de collecte (10) comprend des moyens de déplacement sur roues (18) indépendants desdits moyens de déplacement sur roues (11) reliés audit corps principal (3).

9. Dispositif (1) selon l'une quelconque des revendications précédentes, comprenant également au moins un capteur de détection d'humidité configuré pour mesurer le degré d'humidité à l'intérieur dudit récipient de collecte (10).

10. Dispositif (1) selon la revendication 8 ou 9, dans lequel ledit au moins un capteur de détection d'humidité à l'intérieur dudit récipient de collecte (10) et/ou ledit distributeur d'une substance extinctrice sont installés dans une partie inférieure dudit corps principal (3) faisant face audit récipient de collecte (10).

11. Dispositif (1) selon l'une quelconque des revendications précédentes, comprenant également des moyens (15) pour désengager ledit récipient de collecte (10) dudit corps principal (3) conçus pour déplacer ledit récipient de collecte (10) d'une première configuration hermétique en contact avec ledit corps principal (3) à une deuxième configuration dans laquelle ledit récipient de collecte (10) est désengagé dudit corps principal (3) .
